# EUROPEAN PATENT APPLICATION

(11) **EP 1 519 088 A2**
(43) Date of publication of application: **30.03.2005**
(21) Application number: 04425017.3
(22) Date of filing: 16.01.2004
(51) Int. Cl.: F16J 15/00, B23B 47/00, B23Q 11/00

(54) **Plug for closing holes in pieces during deep drilling**

(30) Priority: 26.09.2003 IT BS20020059 U
(71) Applicant: Cropelli Tarcisio &C. Snc, 25036 Palazzolo s/o (Brescia) (IT)
(72) Inventor: Cropelli, Tarcisio, 25036 Palazzolo S/O (Brescia) (IT)
(74) Representative: Sangiacomo, Fulvia

(57) **Abstract**

The invention concerns a plug for closing holes in pieces during deep-drilling or threading mechanical operations in the presence of a liquid under pressure, such as cutting fluid. It comprises a metal body (11) in the shape of a cylindrical sleeve having along a part of its length a series of flexible fins (16) that expand radially starting from a contracted position, and an expansion stem (12) passing through and translating axially in the body and featuring a conical head (20) that engages and expands said flexible fins when the plug is fitted and has to be blocked in a respective hole.

## Description

### Filed of the invention

This invention concerns an accessory for use in the mechanical machining field with respect to the drilling of deep holes and threading of pieces, normally done in the presence of a liquid under pressure.

### State of the technique

As is well known, some mechanical machining involving metal pieces such as, for example, dies, may require deep drilling or threading, done using a liquid such as cutting fluid. Sometimes the holes to be made intersect with previously made holes. These other holes thus become preferential channels that disperse and drain off the cutting fluid externally, thereby, if nothing else, reducing the efficiency of the machining operation in progress.

To remedy this problem, the previously made holes are plugged with removable plugs. Thus far improvised plugs have been used, consisting of pieces of bars made of copper, aluminium or similar which are forced into the holes to be blocked. Unless they are well blocked however, these plugs can still be ejected by the pressure of the cutting fluid and, if they are too well blocked, then can often be difficult to remove.

Also known and used is a special kind of plug featuring a toric seal that essentially ensures hydraulic sealing, while an expanding ring blocks the plug in the hole to be plugged. In this case too however, it is not uncommon for the plugs to be ejected from the holes due to the pressure of the cutting fluid and because the expanding ring has a limited grip inside the hole.

### Objects and Summary of the Invention

One of the objects of this invention is to provide a plug for use in the aforementioned industrial field, which is highly efficient, even without the seal, and able to remedy the problems and drawbacks of the known technique.

Another object of this invention is to provide a plug for closing holes in pieces during deep drilling or threading operations, using a liquid under pressure, which can be blocked tightly in its hole to prevent ejection even in the hardest operating conditions.

Said objects and the implicit resulting advantages are achieved, according to the invention, by means of a plug comprising a metal body in the shape of a cylindrical sleeve, having a part of its length flexible and movable radially between a contracted position and an expanded position, and an expansion stem, passing and translating axially in said body and having a conical portion that engages said flexible body part to expand it when the plug is fitted and has to be blocked in a respective hole.

### Brief Description of the Drawings

The attached drawings show an embodiment of the plug which will be hereinafter described in greater detail. In said drawings:
Fig. 1 shows a view of the separate plug components
Fig. 2 shows a longitudinal section of the plug when blocked.

### Detailed Description of the Invention

As represented, the plug proposed herein essentially comprises a body 11, an expansion stem 12, a locknut 13 and an associated washer 14.

The body 11 is made of metal in the form of a cylinder-shaped sleeve. At one end it features a stop flange 15 and along part of its length, beyond said flange, a series of flexible fins 16 delimited by longitudinal cuts 17. These fins 16, thanks to their flexibility, are movable radially between a contracted, passive position, in which the sleeve maintains its cylindrical shape, and an expanded, active position, in which the fins diverge in the direction of their free end.

The body 11 also features an axial hole 18 with a conical opening 18' at the end of the flexible fins 16.

The expansion stem 12 is substantially cylinder shaped and sized to pass through the axial hole 18 of body 11. On one part, it features at least one threaded section 19 and, on the opposite part, a conical head 20 that widens towards its free end.

The expansion stem 19 is housed through the body 11 so that the threaded section 19 protrudes from the body on the side of the flange 15 thereof, and its conical head 20 engages between the flexible fins 16. The locknut 13 is screwed onto the threaded section of the stem 19 until it engages against the end flange through the interposed washer 14.

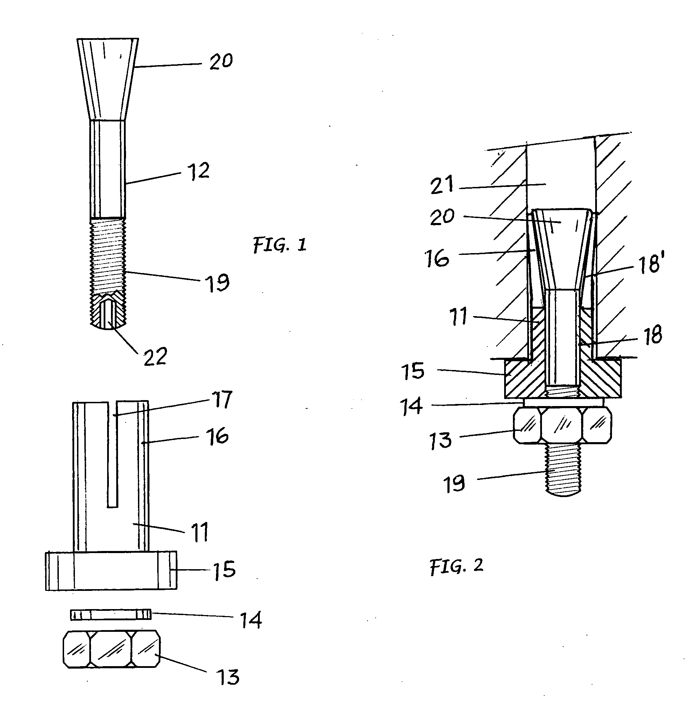

When the fins of body 11 are in contracted condition, the assembled plug can be inserted in a respective hole 21 to be blocked -Fig.2. Then, by tightening the nut 13 on the threaded section 19, an axial translation occurs of stem 12, the conical head 20 of which is inserted between the flexible fins 16, causing expansion. The plug will thus be tightly blocked in said hole, obstructing it so as to prevent the dispersion of oil and resist the force caused by the pressure of the fluid.

To increase the hydraulic seal of the plug in the hole, the body can also feature at least one seal - not shown.

To prevent the stem form rotating with respect to the body at least at the start of locknut 13 tightening, in its free end, that is to say at the threaded section 19 side, a polygonal hole 22 can be formed in which to engage a corresponding spanner by means of which to keep the stem still.

Plug blockage is in any case easily reversible by simply loosening the locknut and pushing the stem back until the flexible fins are able to return to contracted position, thereby enabling the Plug to be removed from the hole.

## Claims

1. Plug for closing holes in pieces during deep-drilling or threading mechanical operations in the presence of a liquid under pressure, such as cutting fluid, **characterised by** a metal plug body (11) in the shape of a cylindrical sleeve, having along a part of its length a series of flexible fins (16) which move axially between a contracted position and an expanded position, and by an expansion stem (12), passing through and translating axially in said body and having a conical head (20) designed to engage with and expand said flexible fins when the plug is fitted and has to be blocked in a respective hole.

2. Plug for closing holes in pieces during deep-drilling or threading mechanical operations in the presence of a liquid under pressure, such as cutting fluid, according to claim 1, wherein said body (11) has an end stop flange (15), and said flexible fins (16) are delimited by longitudinal cuts (17) machined in along a part of plug body length beyond said flange.

3. Plug for closing holes in pieces during deep-drilling or threading mechanical operations in the presence of a liquid under pressure, such as cutting fluid, according to claims 1 and 2, wherein said body (11) is formed with an axial hole (18) with a conical opening (18') on the side of the flexible fins (16), and in which said expansion stem (12) is cylinder shaped and has, on one part, at least one threaded section (19) and, on the opposite part, a conical head (20) that widens towards its free end, the stem being housed passing through said axial hole (18) so that its threaded section (19) protrudes from the body on the side of the stop flange (15) and that its conical head (20) engages the conical opening (18') between the flexible fins (16), expanding these when, on said threaded section, a locknut (13) is fastened and rests against the stop flange for an axial translation of the stem.

4. Plug for closing holes in pieces during deep-drilling or threading mechanical operations in the presence of a liquid under pressure, such as cutting fluid, according to the previous claims, wherein the body can be provided with at least one seal into the hole to be blocked.
